# EUROPÄISCHE PATENTANMELDUNG

(11) **EP 2 437 497 A1**
(43) Veröffentlichungstag der Anmeldung: **04.04.2012**
(21) Anmeldenummer: 11008008.2
(22) Anmeldetag: 04.10.2011
(51) Int. Cl.: H04N 7/18, G08B 13/196, G06F 1/16

(54) **Lageabhängige kameraumschaltung**

(30) Priorität: 04.10.2010 DE 102010047656; 01.12.2010 DE 102010052880
(71) Anmelder: Mobotix AG, 67722 Winnweiler (DE)
(72) Erfinder: Hinkel, Ralf, D-67724 Höringen (DE)
(74) Vertreter: Pietruk, Claus Peter

(57) **Zusammenfassung**

Die Erfindung betrifft ein Verfahren zur Darstellung von Kamerabildern auf einem entfernten, mobilen Betrachtungsgerät, wobei das Betrachtungsgerät einen Bildschirm mit in Längs-und Querrichtung unterschiedlicher Bildpunktzahl, einen Lagesensor zur Bestimmung einer Betrachtungsgerätausrichtung und ein Anforderungsmittel zur Anforderung von Kamerabilddaten von der entfernt zum mobilen Betrachtungsgerät angeordneten Kamera aufweist. Hierbei ist vorgesehen, dass zunächst mit dem Lagesensor bestimmt wird, ob der Bildschirm zur Darstellung eines Hochkant- oder Panoramabildes ausgerichtet ist, eine auf die mit dem Lagesensor erfasste Ausrichtung bezogene Information vom mobilen Betrachtungsgerät an die Kamera gesandt hat, um ein entsprechend der Hochkant- oder Panoramaausrichtung formatiertes Kamerabild von der entfernten Kamera über einen Zweirichtungskommunikationskanal anzufordern und das Kamerabild in der entsprechenden Bildschirmausrichtung empfangen und dargestellt wird

## Beschreibung

Die vorliegende Erfindung betrifft das oberbegrifflich Beanspruchte und bezieht sich somit auf die Darstellung von Kamerabildern auf mobilen Betrachtungsgeräten.

Zur Überwachung kritischer Stellen und Situationen werden in zunehmendem Maße Kameras eingesetzt, von denen Bilder an entfernte Betrachtungsgeräte wie Monitore und dergleichen übertragen werden. Es ist schon bekannt, mobile Betrachtungsgeräte, beispielsweise mobile Telefone mit hinreichend großer Anzeige, zu verwenden, um einen Strom von Kamerabildern oder einzelne Kamerabilder anzuzeigen.

Bei der Übertragung von Kamerabildern ist regelmäßig zu beachten, dass hochaufgelöste, schnell aufeinanderfolgende Kamerabilder eine große Übertragungsbandbreite benötigen, was zu hohen Kommunikationskosten und, bei nicht ausreichender Datenübertragungsgeschwindigkeit, zu nur ungenügender Bilddarstellung führt.

Es ist daher bereits eine Vielzahl von Maßnahmen ergriffen worden, um die Übertragung von Bilddaten zu verbessern. So werden beispielsweise bei Kameras, die hochaufgelöste Bilder (insbesondere Panoramabilder) bereitstellen können, nur jene Ausschnitte übertragen, die für den Betrachter von besonderem Interesse sind.

Dabei gibt es bereits die Möglichkeit, ungeachtet einer höheren Kameraauflösung Bilder jeweils nur in Standard-Bildformate wie VGA-Auflösung, SVGA-Auflösung und dergleichen zu übertragen.

Moderne Mobiltelefone, wie etwa das "iPhone" der Firma APPLE haben nun hinreichend große Bildanzeigen, die es erlauben, ein Kamerabild oder einen Ausschnitt eines Kamerabildes so anzuzeigen, dass über die Anzeige eine Überwachung möglich wird.

Es ist überdies bei mobilen Betrachtungsgeräten wie Mobiltelefonen bekannt, einen Lagesensor vorzusehen, der bei der Aufnahme von Bildern mit der mobiltelefoneigenen Kamera angeben kann, ob ein Bild in Hochkant- oder Panoramaausrichtung aufgenommen wurde.

Die Abspeicherung der Kameraausrichtung mit Bildern ist auch aus der Fototechnik bekannt.

Es ist wünschenswert, Kamerabilder von entfernten Überwachungskameras auf mobilen Betrachtungsgeräten besser darstellen zu können.

Die Lösung dieser Aufgabe wird in unabhängiger Form beansprucht. Bevorzugte Ausführungsformen finden sich in den Unteransprüchen.

Damit schlägt die Erfindung zunächst ein Verfahren zur Darstellung von Kamerabildern auf einem entfernten, mobilen Betrachtungsgerät vor, wobei das Betrachtungsgerät einen Bildschirm mit in Längs- und Querrichtung unterschiedlicher Bildpunktzahl, einen Lagesensor zur Bestimmung einer Betrachtungsgerätausrichtung und ein Anforderungsmittel zu Anforderung von Kamerabilddaten von der entfernt zum mobilen Betrachtungsgerät angeordneten Kamera aufweist. Hierbei ist vorgesehen, dass zunächst mit dem Lagesensor bestimmt wird, ob der Bildschirm zur Darstellung eines Hochkant- oder Panoramabildes ausgerichtet ist und entsprechende Informationen an die Kamera übertragen wird, ein entsprechend der Hochkant-oder Panoramaausrichtung formatiertes Kamerabild von der entfernten Kamera über einen Zweirichtungskommunikationskanal anzufordern und dann das Kamerabild in der entsprechenden Bildschirmausrichtung dargestellt wird.

Es wurde somit erkannt, dass der in Mobiltelefonen und anderen mobilen Betrachtungsgeräten vorhandene Lagesensor zur Reduzierung der eingehenden Datenmenge bei gleich bleibender Bildqualität von Kamerabildern verwendet werden kann, wenn der entfernten Kamera die jeweilige Sollausrichtung mitgeteilt wird; die entfernte Gegenstellenkamera muss dann lediglich in der Lage sein, Bildausschnitte entweder im Hochkant-(Porträt-)Format oder im Panorama-(Landschafts-)Format darzustellen; dies ist bei herkömmlichen Kameras ohne weiteres möglich, da diese auf die Übertragung unterschiedlicher Ausgangsbildformate wie VGA, SVGA, 16:9-, 16:10-, 4:3-Verhältnisse ohnehin ausgerüstet sind. Es ist lediglich erforderlich, die Kameras so auszugestalten, dass etwa neben einem Bild im 16:9-Format auch ein Bild im Format 9:16 zur Verfügung gestellt werden kann usw. Die entsprechende kameraseitige Programmierung ist somit ohne weiteres möglich. Es ist auch möglich, entsprechende unterschiedliche Auflösungen, beispielsweise zur Unterstützung unterschiedlicher Anzeigenauflösungen bei unterschiedlichen Mobiltelefonen oder unterschiedlichen Generationen eines Mobilfunktypus bereit zu stellen. Durch Übermittlung der aktuellen Ausrichtung des mobilen Betrachtungsgeräts wird erreicht, dass trotz optimaler Ausnutzung der in der ausrichtungsgemäß jeweiligen Längs- und Querrichtung gegebenen Bildpunktzahl am mobilen Betrachtungsgerät, wie beispielsweise einem iPhone, eine nur geringe Last auf dem Datenübertragungskanal gegeben ist, was die Kommunikationskosten, den Kommunikationsenergieaufwand usw. bei gleichwohl optimalem Betrachtungsergebnis verbessert.

Es ist bevorzugt, wenn die Kommunikation über ein web-Interface erfolgt, beispielsweise dann, wenn Internetkameras (webcams und dergleichen) angesprochen werden.

Bei der Kommunikation kann also zunächst ein allgemeiner Kontakt zwischen dem Mobiltelefon und der Kamera hergestellt werden, was die Übertragung von Autorisierungsdaten (Passwörtern etc.) und die Übermittlung betrachtungsgerätespezifischer Daten, wie Bildauflösung in Längs- und Querrichtung, darstellbare beziehungsweise gewünschte Framerate usw. umfassen kann. Dies kann auch unter Bewertung der Datenübertragungsqualität geschehen. Dann wird eine Information hinsichtlich der aktuellen Ausrichtung vom Lagesensor am mobilen Betrachtungsgerät erfasst, das heißt es wird festgestellt, ob ein Benutzer das mobile Betrachtungsgerät so hält, dass der Bildschirm mit seiner längeren Seite waagerecht ist (Panorama- beziehungsweise Landschaftsdarstellung) oder hochkant steht (Porträtformat). Diese Information wird dann, typisch in codierter Form, an die Kamera übermittelt. Dies kann entweder geschehen durch Vorgabe eines exakten Auflösungsverhältnisses, zum Beispiel durch Übermittlung eines Browser-Applet-Befehls "640x480" oder "480x640" oder aber durch entsprechende Übermittlung von Flags wie "hochkant=false".

Die Kamera wird daraufhin in per se bekannter Weise einen Bildstrom bereit stellen, der dieser Anforderung exakt entspricht. Es sei darauf hingewiesen, dass in dem Verfahren zusätzlich vorgesehen sein kann, dass eine Schwenk- beziehungsweise Neigesteuerung realisiert wird, was insbesondere bei hemisphärischen Kameras durch Angabe eines gewünschten Bildmittelpunkts oder der Lage einer bestimmten Bildecke in einem größeren Bildfeld geschehen kann. Gleichfalls lassen sich Zoomparameter vorgeben. Je nach Rechenleistungsfähigkeit und gewünschter Anwendung kann eine Entzerrung von Weitwinkelbildern im übrigen kameraseitig oder betrachtungsgerätseitig erfolgen. Es sei im übrigen hingewiesen auf die verschiedenen Anmeldungen der Anmelderin, betreffend die Übermittlung von Ausschnitten, Kamerasteuerungsbefehlen usw. per Browser-Applet oder auf andere Weise. Diese sind zu Offenbarungszwecken vollumfänglich eingegliedert.

Es ist möglich und bevorzugt, die Lageausrichtung wiederholt im mobilen Betrachtungsgerät zu überprüfen. Es kann dann entweder zyklisch oder auf andere Weise wiederholt eine entsprechende Information über die aktuelle Lage an die Kamera übermittelt werden. Insbesondere ist es möglich und bevorzugt, eine Information über eine Lageänderung immer dann an die Kamera zu übersenden, wenn sich die Ausrichtung, wie sie mit dem Lagesensor im Betrachtungsgerät erfasst wird, tatsächlich geändert hat. Ein besonderer Vorteil ergibt sich auch dadurch, dass die übertragenen Bilder im mobilen Betrachtungsgerät nicht mehr aufwändig angepasst werden müssen. Dies verringert die Rechenlast auf dem mobilen Betrachtungsgerät.

Es sei des weiteren, für sich, oder bevorzugt in Kombination mit der Lageausrichtungsfeststellung, als erfinderisch offenbart, dass mit geeigneten Sensoren am mobilen Beobachtungsgerät, insbesondere Beschleunigungsmessern, eine Bewegung des Beobachtungsgeräts erfasst und daraus Schwenkbewegungen des Gerätes ermittelt werden können. Aus diesen ermittelten Schwenkbewegungen kann dann ein Schwenkparameter für das Kamerabild beziehungsweise den Bildausschnitt, der von der Kamera an das mobile Beobachtungsgerät übertragen werden soll, hergeleitet werden und ein entsprechender Bildausschnitt oder ein entsprechendes Bild angefordert werden. Die Auswertung der mit den Beschleunigungssensoren und dergleichen am mobilen Beobachtungsgerät erfassten Bewegungen wird zunächst bevorzugt so vorgenommen, dass nicht ein Zittern oder dergleichen zu einer entsprechenden Anforderung eines zitternden Kamerabilds führt, sondern beispielsweise lediglich gleichmäßige, größere Bewegungen dazu dienen, im Kamerabild zu schwenken. Die Anforderung eines zu übertragenden Kamerabilds kann dann entweder, insbesondere bei hemisphärischen oder sehr weitwinkligen Kamerabildern, die mit hoher Auflösung erfasst werden, so geschehen, dass lediglich ein Ausschnitt entsprechend der jeweiligen Schwenkbewegung übertragen wird, oder es kann gegebenenfalls auch die Kamera tatsächlich physikalisch mitgeschwenkt werden. Dies ergibt eine besonders intuitive Bedienung.

Weiter sei darauf hingewiesen, dass gegebenenfalls eine Bewegung des mobilen Beobachtungsgeräts weg vom Betrachter beziehungsweise hin zum Betrachter als Zoombewegung interpretiert werden kann. Auf diese Weise kann auch eine intuitive Zoomsteuerung vorgesehen werden, wenn ein entsprechender Zoomausschnitt angefordert werden soll. Dabei kann beispielsweise eine ruckartige Bewegung des mobilen Beobachtungsgeräts hin zum Betrachter beziehungsweise weg vom Betrachter zur Auslösung eines durch Veränderung eines Zoomfaktors veränderten Bildausschnitts verwendet werden.

Dass das Verfahren der Erfindung mit herkömmlichen Kompressionsverfahren anwendbar ist, wie der MxPEG-Kodierung, sei erwähnt. Bevorzugt wird bei bestimmten Komprimierungen, in welchen ein Referenzframe verwendet wird, bei Formatwechsel durch Lageänderung, jeweils ein neuer Referenzframe angefordert oder ein Formatwechsel, bei hinreichend schneller Referenzframefolge, bis zum nächsten Referenzframe abgewartet.

## Patentansprüche

1. Verfahren zur Darstellung von Kamerabildern auf einem entfernten, mobilen Betrachtungsgerät, wobei das Betrachtungsgerät einen Bildschirm mit in Längs- und Querrichtung unterschiedlicher Bildpunktzahl, einen Lagesensor zur Bestimmung einer Betrachtungsgerätausrichtung und ein Anforderungsmittel zur Anforderung von Kamerabilddaten von der entfernt zum mobilen Betrachtungsgerät angeordneten Kamera aufweist, **dadurch gekennzeichnet, dass** zunächst mit dem Lagesensor bestimmt wird, ob der Bildschirm zur Darstellung eines Hochkant- oder Panoramabildes ausgerichtet ist, eine auf die mit dem Lagesensor erfasste Ausrichtung bezogene Information vom mobilen Betrachtungsgerät an die Kamera gesandt wird, um ein entsprechend der Hochkant- oder Panoramaausrichtung formatiertes Kamerabild von der entfernten Kamera über einen Zweirichtungskommunikationskanal anzufordern und das Kamerabild in der entsprechenden Bildschirmausrichtung empfangen und dargestellt wird.

2. Verfahren nach dem vorhergehenden Anspruch, **dadurch gekennzeichnet, dass** die Anforderung über ein web-Interface an die Kamera abgesetzt wird.

3. Verfahren nach einem der vorhergehenden Ansprüche, **dadurch gekennzeichnet, dass** die Bildschirmausrichtung wiederholt überprüft und bei Änderung der Bildschirmausrichtung anders formatierte Kamerabilder angefordert werden.

4. Verfahren nach einem der vorhergehenden Ansprüche, **dadurch gekennzeichnet, dass** von der Kamera Bilder entsprechend der in Längs- und Querrichtung gegebenen Bildpunktzahl und der Bildausrichtung angefordert und diese entsprechend an die Kamera übertragen werden, insbesondere durch Auswahl eines Ausschnitts aus einem größeren Kamerabild (Zoom) und/oder durch Kompression gegebener Rohbilddaten höherer Auflösung.

5. Verfahren nach einem der vorhergehenden Ansprüche, **dadurch gekennzeichnet, dass** am mobilen Beobachtungsgerät eine Bewegung erfasst wird, insbesondere mit Beschleunigungssensoren in der x- und y-Richtung des Bildschirms, und entsprechend einer erfassten Schwenkbewegung des Beobachtungsgeräts ein durch Schwenken bestimmter Ausschnitt aus einem größeren Kamerabild angefordert wird.
